# EUROPEAN PATENT APPLICATION

(11) **EP 4 564 494 A1**
(43) Date of publication of application: **04.06.2025**
(21) Application number: 23846517.3
(22) Date of filing: 25.07.2023
(51) Int. Cl.: H01M 10/04, H01M 4/02, H01M 4/13, H01M 10/0585, H01M 10/052

(54) **METHOD FOR MANUFACTURING BATTERY**

(30) Priority: 28.07.2022 JP 2022120967
(71) Applicant: FUJIFILM Corporation, Tokyo 106-8620 (JP)
(72) Inventor: FUCHIGAMI, Yujiro, ashigara-shi, Kanagawa 250-0193 (JP)
(74) Representative: Meissner Bolte Partnerschaft mbB
(86) International application number: PCT/JP2023/027222
(87) International publication number: WO 2024/024787

(57) **Abstract**

Provided is a manufacturing method of a battery, including a step of forming a positive electrode on a surface of a first collector of a first stage having a surface on which the first collector is provided to obtain a first laminate, a step of forming a negative electrode on a surface of a second collector of a second stage having a surface on which the second collector is provided to obtain a second laminate, and a step of laminating the first laminate, the second laminate, and a separator to obtain a laminate including the first stage, a battery which includes the first collector, the positive electrode, the separator, the negative electrode, and the second collector, and the second stage in this order.

## Description

### BACKGROUND OF THE INVENTION

### 1. Field of the Invention

The present disclosure relates to a manufacturing method of a battery.

### 2. Description of the Related Art

In recent years, development of a semi-solid state battery or an all-solid state battery has been studied.

The semi-solid state battery and the all-solid state battery (hereinafter, collectively referred to as a battery) have a configuration in which a first collector, a positive electrode, a separator, a negative electrode, and a second collector are provided in this order.

In recent years, in order to reduce costs, it has been studied to increase thicknesses of the positive electrode and the negative electrode (hereinafter, collectively referred to as an electrode) and to reduce the number of members.

### SUMMARY OF THE INVENTION

From the viewpoint of manufacturing efficiency, a roll-to-roll method is usually employed as a manufacturing method of a battery (for example, refer to JP2021-530829A).

The present inventors have found that, in a case where a battery including an electrode having a thick film is manufactured by the roll-to-roll method, an external force is applied to the electrode in the formation of the electrode on a surface of a collector to be transported, and an internal stress is generated in the electrode.

Generally, the electrode is closely attached to the collector by van der Waals force, and an adhesive or the like is not used. Therefore, it has been found that there is a concern that the electrode may collapse from the collector due to the internal stress, and a deviation may occur at a bonding position between the collector on which the positive electrode is formed and the collector on which the negative electrode is formed. In addition, in a case where there is a deviation in the bonding position, the separator may be destroyed due to precipitation from the electrode such as lithium, and a short circuit may occur.

An object to be achieved by one embodiment of the present disclosure is to provide a manufacturing method of a battery, in which collapse of an electrode from a collector is suppressed, and a deviation of a bonding position between a collector on which a positive electrode is formed and a collector on which a negative electrode is formed is suppressed.

Specific methods for achieving the object are as follows.
<1> A manufacturing method of a battery, comprising:
   a step of forming a positive electrode on a surface of a first collector of a first stage having a surface on which the first collector is provided to obtain a first laminate;
   a step of forming a negative electrode on a surface of a second collector of a second stage having a surface on which the second collector is provided to obtain a second laminate; and
   a step of laminating the first laminate, the second laminate, and a separator to obtain a laminate including the first stage, a battery which includes the first collector, the positive electrode, the separator, the negative electrode, and the second collector, and the second stage in this order.
<2> The manufacturing method of a battery according to <1>,
   in which the positive electrode and the negative electrode are formed of a composition containing an active material and a conductive auxiliary agent, and
   a content of solid components with respect to a total volume of the composition is 30% by volume to 60% by volume.
<3> The manufacturing method of a battery according to <1> or <2>,
   in which the first stage and the second stage have an adsorption mechanism.
<4> The manufacturing method of a battery according to any one of <1> to <3>,
   in which a heat welding layer and the first collector are provided in this order on the surface of the first stage, and a heat welding layer and the second collector are provided in this order on the surface of the second stage.
<5> The manufacturing method of a battery according to any one of <1> to <4>,
   in which the lamination of the first laminate, the second laminate, and the separator is carried out by
   holding an end part of the separator by a holding member,
   bringing one surface of the separator into contact with the positive electrode of the first laminate or the negative electrode of the second laminate,
   releasing the separator from the holding member, placing the separator on the surface of the positive electrode of the first laminate or the negative electrode of the second laminate, and
   placing the positive electrode of the first laminate or the negative electrode of the second laminate on the other surface of the separator.

According to one embodiment of the present disclosure, it is possible to provide a manufacturing method of a battery, in which collapse of an electrode from a collector is suppressed, and a deviation of a bonding position between a collector on which a positive electrode is formed and a collector on which a negative electrode is formed is suppressed.

### BRIEF DESCRIPTION OF THE DRAWINGS

Fig. 1 is a schematic cross-sectional view for describing one embodiment of a manufacturing method of a battery according to the present disclosure.
Fig. 2 is a schematic cross-sectional view for describing one embodiment of the manufacturing method of a battery according to the present disclosure.
Fig. 3 is a schematic cross-sectional view for describing one embodiment of the manufacturing method of a battery according to the present disclosure.
Fig. 4 is a schematic cross-sectional view for describing one embodiment of the manufacturing method of a battery according to the present disclosure.
Fig. 5 is a schematic cross-sectional view for describing one embodiment of the manufacturing method of a battery according to the present disclosure.
Fig. 6 is a schematic cross-sectional view for describing one embodiment of a method of laminating a separator.
Fig. 7 is a top view for describing formation of a first collector on a surface of a heat welding layer in Example 1.
Fig. 8 is a top view for describing formation of a positive electrode on a surface of the first collector in Example 1.
Fig. 9 is a top view for describing formation of a second collector on a surface of a heat welding layer in Example 1.
Fig. 10 is a top view for describing formation of a negative electrode on a surface of the second collector in Example 1.

### DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

In the present disclosure, in a case where an embodiment is described with reference to the drawing, the configuration of the embodiment is not limited to the configuration shown in the drawing. In addition, sizes of members in each drawing are conceptual, and a relative relationship between the sizes of the members is not limited thereto.

### [Manufacturing method of battery]

The manufacturing method of a battery according to the present disclosure includes a step of forming a positive electrode on a surface of a first collector of a first stage having a surface on which the first collector is provided to obtain a first laminate, a step of forming a negative electrode on a surface of a second collector of a second stage having a surface on which the second collector is provided to obtain a second laminate, and a step of laminating the first laminate, the second laminate, and a separator to obtain a laminate including the first stage, a battery which includes the first collector, the positive electrode, the separator, the negative electrode, and the second collector, and the second stage in this order.

According to the manufacturing method of a battery according to the present disclosure, it is possible to suppress collapse of an electrode from a collector (hereinafter, the collapse of the electrode from the collector will also be referred to as "collapse of the electrode") and to suppress a deviation of a bonding position between a collector on which a positive electrode is formed and a collector on which a negative electrode is formed (hereinafter, the deviation of the bonding position between the collector on which the positive electrode is formed and the collector on which the negative electrode is formed will also be referred to as "deviation of the bonding position").

The reason why the above-described effect is exhibited is not clear, but is presumed as follows.

In the manufacturing method of a battery according to the present disclosure, the battery is manufactured by laminating the first laminate including the first collector and the positive electrode, which is placed on the surface of the first stage, and the second laminate including the second collector and the negative electrode, which is placed on the surface of the second stage, with a separator interposed therebetween without peeling off the first laminate and the second laminate from the stages.

In the present disclosure, as described above, since the battery including the first collector, the positive electrode, the separator, the negative electrode, and the second collector in this order can be manufactured in a single-sheet form without being peeled off from the stages, an external force applied to the electrodes can be reduced in the manufacturing of the battery. Therefore, it is presumed that it is possible to suppress the collapse of the electrode and the deviation of the bonding position.

### (Step of obtaining first laminate and second laminate)

The manufacturing method of a battery according to the present disclosure includes a step of forming a positive electrode on a surface of a first collector of a first stage having a surface on which the first collector is provided to obtain a first laminate, and a step of forming a negative electrode on a surface of a second collector of a second stage having a surface on which the second collector is provided to obtain a second laminate.

Here, the first laminate refers to a laminate including the first collector and the positive electrode; and the second laminate refers to a laminate including the second collector and the negative electrode.

A method of forming the positive electrode on the surface of the first collector and a method of forming the negative electrode on the surface of the second collector are not particularly limited, and can be carried out by a conventionally known method.

For example, the positive electrode or the negative electrode can be formed by applying a composition containing a positive electrode active material or a negative electrode active material, and a conductive auxiliary agent to the surface of the first collector or the second collector.

A method of disposing the first collector on the surface of the first stage and a method of disposing the second collector on the surface of the second stage are not particularly limited, and can be carried out by a method known in the related art.

For example, in a case where a heat welding layer is provided on the surface of the first stage, the first collector can be disposed on the surface of the first stage by forming an adhesive layer on a surface of the heat welding layer and disposing an aluminum foil as the collector on the surface of the adhesive layer.

The method of forming the heat welding layer is not particularly limited, and the heat welding layer can be formed by disposing a resin film or the like on the surface of the first stage.

In addition, as will be described later, in a case where the first stage and the second stage have an adsorption mechanism, the adsorption mechanism may hold the heat welding layer on the surface of the first stage and the second stage.

The method of forming the adhesive layer is not particularly limited, and examples thereof include a method of applying an adhesive or the like onto the surface of the heat welding layer, and a method of disposing an adhesive film or the like.

### -First stage and second stage-

In the first stage, the first collector is provided on the surface; and in the second stage, the second collector is provided on the surface.

A heat welding layer and the above-described first collector may be provided in this order on the surface of the first stage. In addition, the above-described heat welding layer, an adhesive layer, and the above-described first collector may be provided in this order on the surface of the first stage.

A heat welding layer and the above-described second collector may be provided in this order on the surface of the second stage. In addition, the above-described heat welding layer, an adhesive layer, and the above-described second collector may be provided in this order on the surface of the second stage.

It is preferable that the first collector, the second collector, and the like described above are provided to be peelable from the first stage and the second stage.

A material constituting the first stage and the second stage (hereinafter, collectively referred to as a stage) is not particularly limited, and examples thereof include aluminum, stainless steel, and bakelite.

The stage may have an adsorption mechanism.

The adsorption mechanism is not particularly limited as long as it is a mechanism which has a function of adsorbing a target member (the heat welding layer, the adhesive layer, the collector, the electrode, and the like) on the surface of the stage. The adsorption mechanism is composed of, for example, a plurality of holes provided on the surface of the stage, and an intake pipe connected to the stage and a vacuum pump. By suctioning an internal air of the holes provided on the surface of the stage from the above-described intake pipe and bringing the inside of the holes into a reduced pressure state, it is possible to improve retention of the heat welding layer, the adhesive layer, the collector, the electrode, and the like on the surface of the stage.

The adsorption mechanism may stop holding the collector and the like at a moment when the suction from the intake pipe is stopped, or may maintain the reduced pressure state inside the holes provided on the surface of the stage and maintain the holding of the collector and the like for a certain period of time.

A thickness of the stage is not particularly limited, and for example, from the viewpoint of transportability, it can be set to 1 mm to 50 mm.

### -First collector-

The first collector can contain a conventionally known material contained in a positive electrode collector. The first collector preferably contains one or more metals selected from the group consisting of aluminum, an aluminum alloy, stainless steel, nickel, and titanium; and more preferably contains one or more metals selected from the group consisting of aluminum and an aluminum alloy.

In addition, the first collector may have, on a surface thereof, a coating layer containing one or more of carbon, nickel, titanium, silver, gold, platinum, and vanadium oxide.

From the viewpoint of transportability and the like, a thickness of the first collector is preferably 3 µm or more, more preferably 5 µm or more, and particularly preferably 10 µm or more.

From the viewpoint of flexibility and lightness, the above-described thickness is preferably 100 µm or less, more preferably 70 µm or less, and still more preferably 50 µm or less.

### -Second collector-

The second collector can contain a conventionally known material contained in a negative electrode collector. The second collector preferably contains one or more metals selected from the group consisting of aluminum, copper, a copper alloy, stainless steel, nickel, and titanium; and more preferably contains one or more metals selected from the group consisting of aluminum, copper, a copper alloy, and stainless steel.

In addition, the second collector may have, on a surface thereof, a coating layer containing one or more of carbon, nickel, titanium, silver, gold, platinum, and vanadium oxide.

From the viewpoint of transportability and the like, a thickness of the second collector is preferably 3 µm or more, more preferably 5 µm or more, and particularly preferably 10 µm or more.

From the viewpoint of flexibility and lightness, the above-described thickness is preferably 100 µm or less, more preferably 70 µm or less, and particularly preferably 50 µm or less.

### -Positive electrode and negative electrode-

The positive electrode and the negative electrode (hereinafter, collectively referred to as an electrode) are formed of a composition containing an active material and a conductive auxiliary agent.

The active material is preferably an active material capable of reversibly intercalating and deintercalating lithium ions.

From the viewpoint of improving a volume energy density, the positive electrode and the negative electrode are formed of a composition containing an active material and a conductive auxiliary agent; and a content of solid components with respect to the total volume of the composition (that is, the total volume of the electrode) may be 30% by volume or more, preferably 30% by volume to 60% by volume, more preferably 35% by volume to 55% by volume, and still more preferably 40% by volume to 50% by volume.

Specific examples of the active material which can be used for the positive electrode (hereinafter, referred to as a positive electrode active material) include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B).

A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced by a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to easily form the positive electrode, and it is possible to suppress scattering of a material constituting the positive electrode during handling. In a case where the volume average particle diameter of the positive electrode active material is 40 µm or less, the thickness of the battery can be easily adjusted, and generation of voids in the molding process can be suppressed.

The volume average particle diameter of the positive electrode active material is measured by the following method.

A dispersion liquid containing 0.1% by mass of the positive electrode active material is prepared by mixing the positive electrode active material with a solvent (for example, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-920 manufactured by Horiba, Ltd.), data is taken in 50 times under a condition of a temperature of 25°C, and the volume average particle diameter is obtained. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

The composition may contain only one kind of the positive electrode active material or may contain two or more kinds of the positive electrode active materials.

In addition, even in a case where the composition contains one kind of the positive electrode active material, positive electrode active materials having different particle diameters may be used in combination.

A content of the positive electrode active material with respect to the total volume of the composition constituting the positive electrode may be 30% by volume or more, preferably 30% by volume to 60% by volume, more preferably 35% by volume to 55% by volume, and still more preferably 40% by volume to 50% by volume.

A surface of the positive electrode active material may be coated with a surface coating agent. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

Examples of the active material which can be used for the negative electrode (hereinafter, referred to as a negative electrode active material) include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In).

Among the above, from the viewpoint of reliability, the negative electrode active material is preferably a carbonaceous material or a lithium composite oxide.

Examples of the carbonaceous material include a material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin).

Examples of the carbonaceous material also include carbon fiber (polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, activated carbon fiber, and the like).

Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced by a known method (for example, a baking method). For example, a negative electrode active material obtained by the baking method may be washed with water, an acidic aqueous solution, an alkaline aqueous solution, or an organic solvent.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured by a method based on the method of measuring the volume average particle diameter of the positive electrode active material described above.

Examples of a method of adjusting the particle diameter of the negative electrode active material include a method of using a pulverizer or a classifier.

The composition contained in the negative electrode may contain only one kind of the negative electrode active material or may contain two or more kinds of the negative electrode active materials.

A content of the negative electrode active material with respect to the total volume of the composition constituting the negative electrode may be 30% by volume or more, preferably 30% by volume to 60% by volume, more preferably 35% by volume to 57% by volume, and still more preferably 45% by volume to 55% by volume.

A surface of the negative electrode active material may be coated with the above-described surface coating agent.

From the viewpoint of improving electron conductivity of the active material, the above-described composition preferably contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The above-described composition may contain only one kind of the conductive auxiliary agent or may contain two or more kinds of the conductive auxiliary agents.

In a case where the composition contains the conductive auxiliary agent, from the viewpoint of improving the electron conductivity, a content of the conductive auxiliary agent with respect to the total volume of the composition is preferably 0.05% by volume to 5% by volume, more preferably 0.1% by volume to 4% by volume, and still more preferably 0.5% by volume to 3% by volume.

From the viewpoint of improving battery performance (discharge capacity, output characteristics, and the like), the composition may contain an inorganic solid electrolyte.

Here, the "solid electrolyte" means a solid electrolyte in which ions can be moved therein.

The inorganic solid electrolyte is included in the solid components.

Since the inorganic solid electrolyte does not contain an organic substance as a main ion conducting material, the inorganic solid electrolyte is clearly distinguished from an organic solid electrolyte (for example, a polymer electrolyte represented by polyethylene oxide (PEO) and an organic electrolyte salt represented by lithium bis(trifluoromethanesulfonyl)imide (LiTFSI)).

In addition, since the inorganic solid electrolyte is a solid in a steady state, the inorganic solid electrolyte is not dissociated or liberated into cations or anions. Therefore, the inorganic solid electrolyte is also clearly distinguished from an inorganic electrolyte salt (for example, LiPF₆, LiBF₄, lithium bis(fluorosulfonyl)imide (LiFSI), and LiCl) which dissociates or liberates into cations or anions in an electrolytic solution or a polymer.

The inorganic solid electrolyte is not limited as long as it is an inorganic solid electrolyte having an ion conductivity of a metal element belonging to Group 1 or Group 2 in the periodic table, and the inorganic solid electrolyte generally does not have electron conductivity.

In a case where the battery is used for a lithium ion battery, the inorganic solid electrolyte preferably has ion conductivity of lithium ions.

Examples of the inorganic solid electrolyte include a sulfide-based inorganic solid electrolyte and an oxide-based inorganic solid electrolyte. Among the above, from the viewpoint of being able to form a favorable interface between the active material and the inorganic solid electrolyte, the inorganic solid electrolyte is preferably a sulfide-based inorganic solid electrolyte.

The inorganic solid electrolyte preferably has a particle shape.

A volume average particle diameter of the inorganic solid electrolyte is preferably 0.01 µm or more, and more preferably 0.1 µm or more. The upper limit of the volume average particle diameter of the inorganic solid electrolyte is preferably 100 µm or less, and more preferably 50 µm or less.

The volume average particle diameter of the inorganic solid electrolyte is measured by a method based on the method of measuring the volume average particle diameter of the positive electrode active material described above.

The composition may contain only one kind of the inorganic solid electrolyte or may contain two or more kinds of the inorganic solid electrolytes.

In a case where the composition contains the inorganic solid electrolyte, from the viewpoint of reducing an interface resistance and maintaining battery characteristics (for example, improving cycle characteristics), a content of the inorganic solid electrolyte with respect to the total volume of the composition is still more preferably 25% by volume to 35% by volume.

The composition may contain an electrolytic solution.

The electrolytic solution is included in liquid components.

The electrolytic solution is not limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

Examples of the electrolyte contained in the electrolytic solution also include the materials described in the section of "Inorganic solid electrolyte" above.

As a component of the electrolytic solution, for example, an ionic liquid may be used. The ionic liquid may be used as the electrolyte or the solvent.

A content of the electrolytic solution with respect to the total volume of the composition is preferably 70% by volume or less, more preferably 60% by volume or less, and still more preferably 55% by volume or less. In a case where the content of the electrolytic solution in the composition is 70% by volume or less, it is possible to suppress the electrolytic solution from bleeding out in a case where the composition is molded.

The lower limit of the content of the electrolytic solution in the composition is not limited, and may be 0% by volume or more and may exceed 0% by volume.

The composition may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The composition may contain only one kind of the solvent or may contain two or more kinds of the solvents.

A content of the liquid components (that is, the electrolytic solution and the solvent) with respect to the total volume of the composition is preferably 70% by volume or less, more preferably 60% by volume or less, and still more preferably 55% by volume or less.

In a case where the content of the liquid components in the composition is 70% by volume or less, it is possible to suppress the liquid components from bleeding out in a case where the composition is molded. In addition, in a case where the liquid components includes the solvent, deterioration in battery performance can be suppressed.

The lower limit of the content of the liquid components in the composition is not limited, and may be 0% by volume or more and may exceed 0% by volume.

The liquid component in the composition, that is, the component in the composition, which is in a liquid state at 25°C, is preferably in a liquid state even at -10°C and preferably in a liquid state even at -20°C. That is, the component in the composition, which is in a liquid state at 25°C, is preferably a component which does not solidify at -10°C, and preferably a component which does not solidify at -20°C.

The composition may contain additives such as a binder, a pigment, a dye, an ultraviolet absorber, a light stabilizer, an antioxidant, and a thickener.

From the viewpoint of suppressing cost reduction and excessive increase in internal resistance, a thickness of the electrode is preferably 50 µm to 700 µm and more preferably 100 µm to 650 µm.

### -Heat welding layer-

By providing the heat welding layer on the surface of the stage, it is possible to manufacture a battery having a configuration in which the heat welding layer on the first collector side and the heat welding layer on the second collector side are heat-welded to seal the battery.

The heat welding layer can contain a thermoplastic resin. Examples of the thermoplastic resin include polyethylene terephthalate (PET), polypropylene (PP), polyethylene (PE), a cyclic olefin polymer, triacetyl cellulose (TAC), polyimide (PI), polyamide (PA), an ethylene-vinyl acetate copolymer (EVA), and an ethylene-methyl methacrylate copolymer (EMMA).

A content of the thermoplastic resin with respect to the total mass of the heat welding layer is not particularly limited, and may be 50% by mass or more, 70% by mass or more, 90% by mass or more, or 100% by mass.

The heat welding layer may contain the above-described additive.

A thickness of the heat welding layer is not particularly limited, and can be, for example, 3 µm to 25 µm.

### -Adhesive layer-

The adhesive layer can contain the above-described thermoplastic resin. By providing the adhesive layer on the surface of the heat welding layer, adhesiveness between the heat welding layer and the collector can be improved.

A content of the thermoplastic resin with respect to the total mass of the adhesive layer is not particularly limited, and may be 50% by mass or more, 70% by mass or more, 90% by mass or more, or 100% by mass.

The adhesive layer may contain the above-described additives.

A thickness of the adhesive layer is not particularly limited, and can be 0.1 µm to 10 µm.

### [Step of obtaining laminate]

The manufacturing method of a battery according to the present disclosure includes a step of laminating the first laminate, the second laminate, and a separator to obtain a laminate including a first stage, a battery which includes the first collector, the positive electrode, the separator, the negative electrode, and the second collector, and the second stage in this order.

A method of laminating the first laminate, the second laminate, and the separator is not particularly limited, and can be carried out by a conventionally known method.

Examples thereof include a method of interposing the separator between the positive electrode of the first laminate and the negative electrode of the second laminate and using a pressurizing roller or the like to form the laminate.

It is preferable that the lamination of the first laminate, the second laminate, and the separator is carried out by holding an end part of the separator by a holding member, bringing one surface of the separator into contact with the positive electrode of the first laminate or the negative electrode of the second laminate, releasing the separator from the holding member, placing the separator on the surface of the positive electrode of the first laminate or the negative electrode of the second laminate, and placing the positive electrode of the first laminate or the negative electrode of the second laminate on the other surface of the separator.

According to the above-described lamination method, it is possible to laminate the positive electrode or the negative electrode from a central portion of the separator toward the end part, and it is possible to suppress generation of an air bubble between the separator and the positive electrode or the negative electrode.

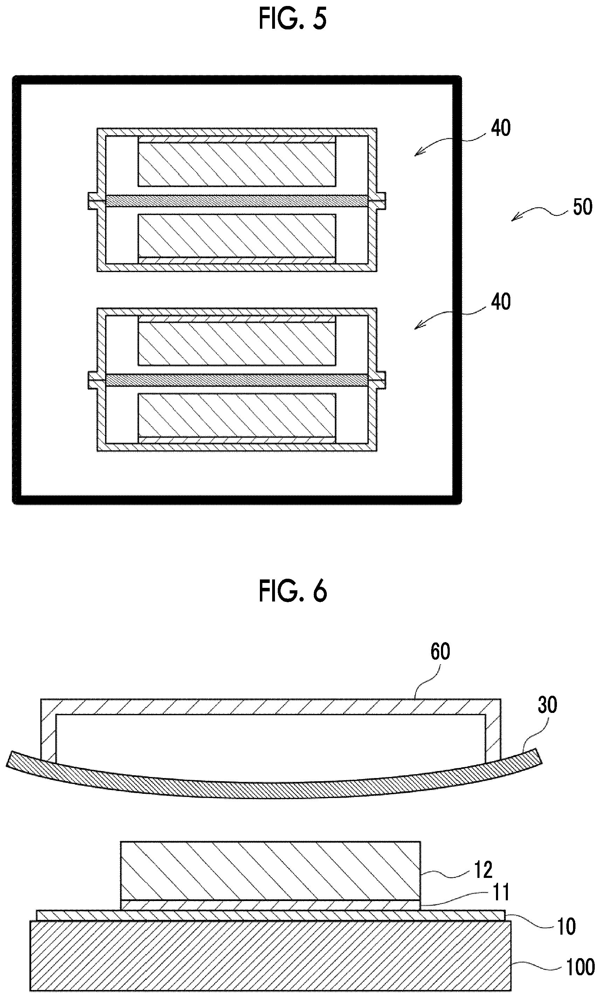

As shown in Fig. 6, an end part of a separator 30 is held by a holding member 60. The method of holding the separator by the holding member is not particularly limited, and examples thereof include a method of providing an adsorption mechanism to the holding member.

From the viewpoint of further suppressing the air bubble, it is preferable that the separator is bent and held such that the central portion thereof is convex toward the electrode side in contact with the central portion. A curvature radius of the separator held by the holding member is preferably 1,000 mm or less, and more preferably 500 mm or less. The lower limit of the curvature radius is preferably 150 mm or more, and more preferably 200 mm or more.

### (Separator)

As the separator, a separator which has been conventionally used for a semi-solid state battery or an all-solid state battery can be appropriately selected and used. Examples of the separator include a porous membrane containing a resin material such as polyethylene, polypropylene, polybutene, polyvinyl chloride, polyethylene terephthalate, polyether sulfone, polyamide, polyimide, polyimide amide, polyamide, polycycloolefin, nylon, and polytetrafluoroethylene.

A thickness of the separator is not particularly limited, and can be 0.5 µm to 40 µm.

### [Step of peeling off stage]

The manufacturing method of a battery according to the present disclosure can include a step of peeling off the stage. As a result, the battery manufactured between the first stage and the second stage can be taken out.

A method of peeling off the stage is not particularly limited, and the peeling can be carried out by a known method in the related art. In a case where the stage has an adsorption mechanism, the peeling can be carried out by eliminating the reduced pressure state inside the stage.

### [Step of heat-welding heat welding layer]

In a case where the heat welding layer and the collector are provided in this order on the surface of the stage, the manufacturing method of a battery according to the present disclosure may include a step of heat-welding the heat welding layer on the first collector side and the heat welding layer on the second collector side, which are included in the obtained battery.

The heat welding method is not particularly limited, and examples thereof include a method of heating a portion of the heat welding layer to be heat-welded and pressure-bonding the portion.

### [Step of accommodating battery in exterior body]

The manufacturing method of a battery according to the present disclosure may include a step of accommodating the manufactured battery in an exterior body.

A known exterior body in the related art can be used, and for example, an exterior body composed of aluminum, stainless steel, or the like can be used. In addition, a shape of the exterior body is not limited as long as the battery can be accommodated, and for example, a bottomed cylindrical shape can be used.

The number of batteries accommodated in the exterior body may be 1 or 2 or more.

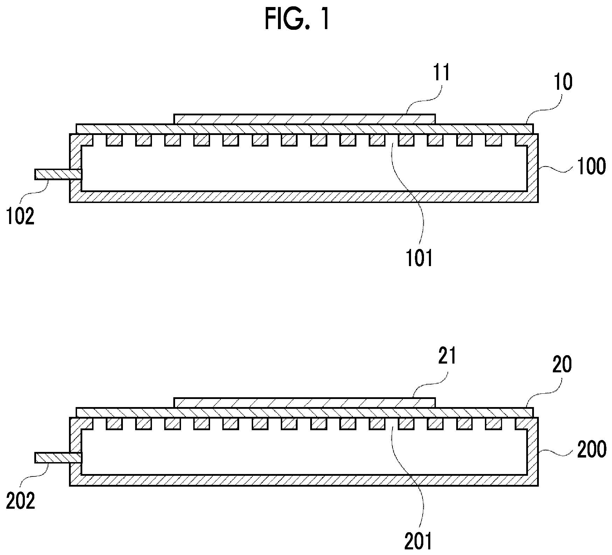

Embodiments of the manufacturing method of a battery according to the present disclosure will be described with reference to Figs. 1 to 5. The manufacturing method of a battery according to the present disclosure is not limited thereto.

As shown in Fig. 1, a first stage 100 in which a heat welding layer 10 and a first collector 11 are provided on a surface in this order, and a second stage 200 in which a heat welding layer 20 and a second collector 21 are provided on a surface in this order are prepared.

The first stage 100 and the second stage 200 have an adsorption mechanism consisting of a plurality of holes 101 and 201 on the surface, and intake pipes 102 and 202 connected to the stage and a vacuum pump (not shown).

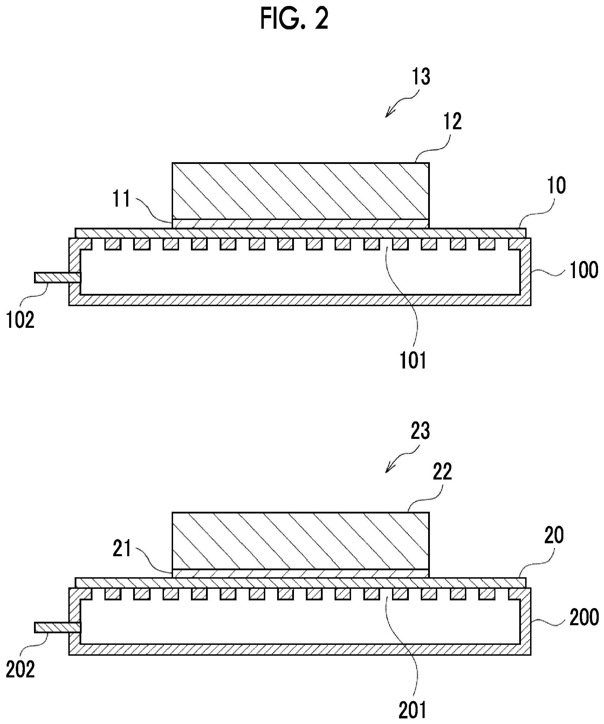

Next, as shown in Fig. 2, a positive electrode 12 is formed on a surface of the first collector 11 to obtain a first laminate 13.

In addition, as shown in Fig. 2, a negative electrode 22 is formed on a surface of the second collector 21 to obtain a second laminate 23.

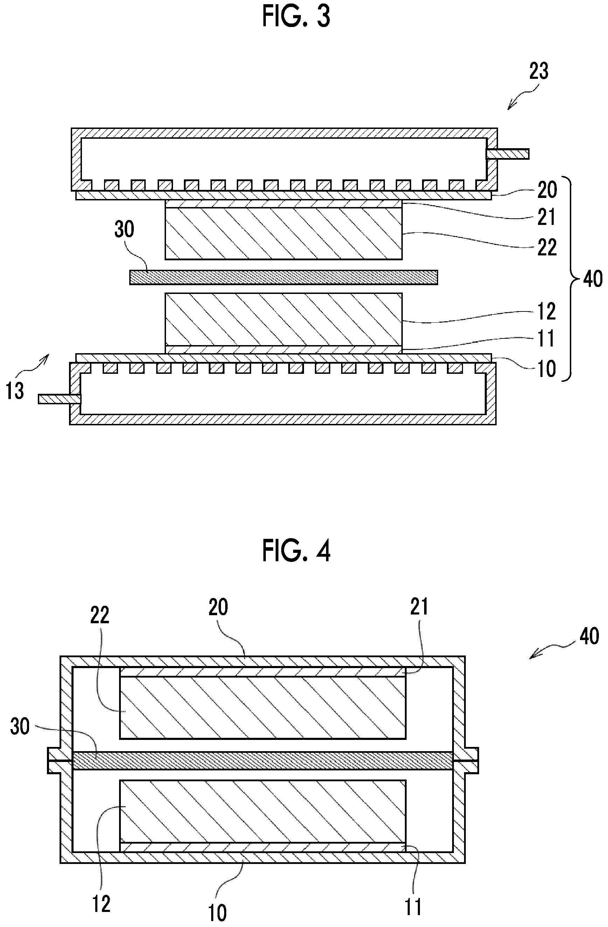

As shown in Fig. 3, the first laminate 13, the second laminate 23, and the separator 30 are laminated to obtain a laminate including the first stage 100, a battery 40 which the heat welding layer 10, the first collector 11, the positive electrode 12, the separator 30, the negative electrode 22, the second collector 21, and the heat welding layer 20, and the second stage 200 in this order.

As shown in Fig. 4, the heat welding layer 10 on the first collector 11 side and the heat welding layer 20 on the second collector 21 side in the battery 40 are heat-welded.

By accommodating the battery 40 manufactured as described above in an exterior body 50 as shown in Fig. 5, the battery accommodated in the exterior body can be obtained.

### Examples

Hereinafter, the above-described embodiment will be specifically described with reference to Examples, but the above-described embodiment is not limited to Examples.

### (Preparation of composition for positive electrode)

(1) A mixed solution obtained by mixing ethylene carbonate, propylene carbonate, and diethyl carbonate was mixed with a 0.9 mol/L LiPF₆ solution (electrolyte), and vinylene carbonate (VC) was further mixed therewith to obtain an electrolytic solution X1.
(2) 2 g of a conductive auxiliary agent (Ketjen black) and 174 g of a positive electrode active material (iron phosphate) were stirred at 1,500 revolutions per minute (rpm; the same applies hereinafter) for 30 seconds with a mixer (AWATORI RENTARO ARE-310, manufactured by THINKY Corporation) to prepare a kneaded material Y1 (176 g).
(3) The electrolytic solution X1 (64 g) was added to the kneaded material Y1 (176 g), and the mixture was stirred at 1,500 rpm for 120 seconds with a mixer (AWATORI RENTARO ARE-310, manufactured by THINKY Corporation) to obtain a composition for a positive electrode (content of solid components: 48% by volume).

### (Preparation of composition for negative electrode)

(1) The same electrolytic solution X1 (64 g) used in the preparation of the composition for a positive electrode was prepared.
(2) 6.5 g of a conductive auxiliary agent and 152.5 g of graphite as a negative electrode active material were stirred at 900 rpm for 18 seconds with a mixer (AWATORI RENTARO ARE-310, manufactured by THINKY Corporation) to prepare a kneaded material Z1.
(3) The electrolytic solution X1 (64 g) was added to the kneaded material Z1 (159 g), and the mixture was stirred at 900 rpm for 30 seconds with a mixer (AWATORI RENTARO ARE-310, manufactured by THINKY Corporation) to obtain a composition for a negative electrode (content of solid components: 52% by volume).

### <Example 1>

As a first stage and a second stage, an aluminum stage having a thickness of 30 mm was prepared.

The first stage and the second stage had an adsorption mechanism consisting of a plurality of holes and an intake pipe connected to the stage and a vacuum pump.

A polyethylene terephthalate (PET) film (heat welding layer) having a thickness of 12 µm, a length of 269.88 mm, and a width of 187.60 mm was disposed on the surface of the first stage, and the air inside holes of the second stage was suctioned by the intake pipe to reduce the pressure inside the holes and hold the PET film.

A polyethylene terephthalate (PET) film (heat welding layer) having a thickness of 12 µm, a length of 269.88 mm, and a width of 190.30 mm was disposed on the surface of the second stage, and the air inside holes of the second stage was suctioned by the intake pipe to reduce the pressure inside the holes and hold the PET film.

An adhesive was applied onto the surface of the PET film provided on the surface of the first stage and dried to form an adhesive layer having a thickness of 8 µm, and then an aluminum foil (first collector, thickness: 20 µm, surface roughness Ra: 0.5 µm, carbon coating) was laminated on a surface of the adhesive layer.

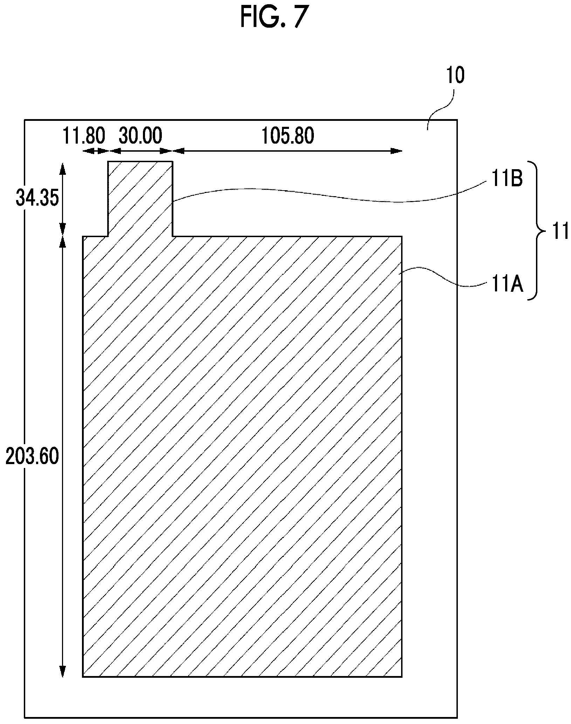

As shown in Fig. 7, the first collector 11 included a body part 11A having a length of 203.60 mm and a width of 147.60 mm and a tab part 11B having a length of 30.00 mm and a width of 34.35 mm for extracting electricity.

In Fig. 7, the heat welding layer is indicated by reference numeral 10.

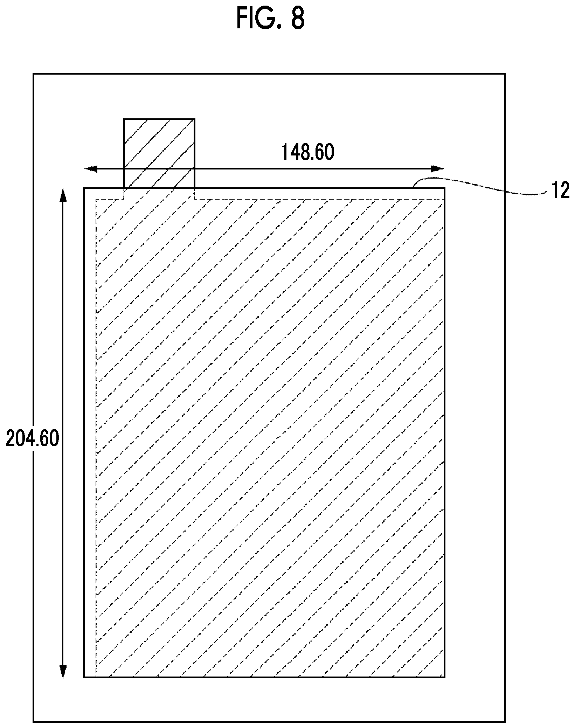

As shown in Fig. 8, the composition for a positive electrode was applied onto the surface of the first collector to form the positive electrode 12 (length 204.60 mm × width 148.60 mm) having a thickness of 297.3 µm, thereby obtaining a first laminate.

An adhesive was applied onto the surface of the PET film provided on the surface of the second stage and dried to form an adhesive layer having a thickness of 8 µm, and then a copper foil (second collector, thickness: 10 µm, surface roughness Ra: 0.55 µm) was laminated on a surface of the adhesive layer.

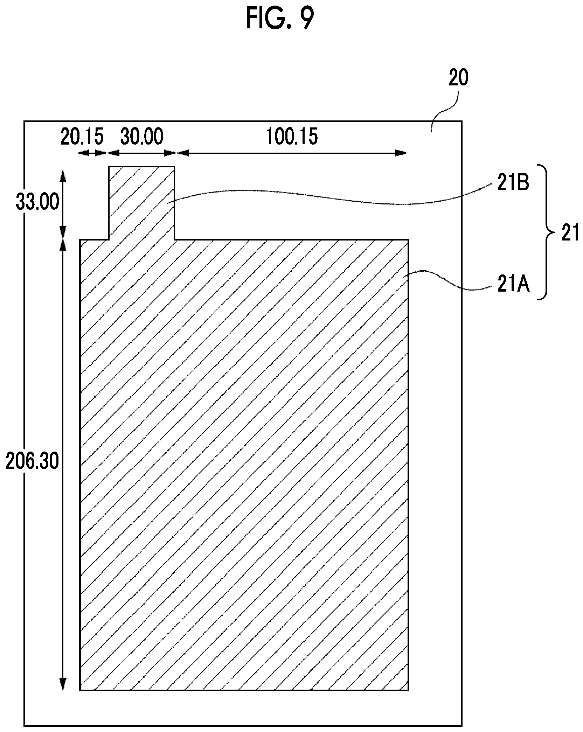

As shown in Fig. 9, the second collector 21 included a body part 21A having a length of 206.30 mm and a width of 150.30 mm and a tab part 21B having a length of 30.00 mm and a width of 34.35 mm for extracting electricity.

In Fig. 9, the heat welding layer is indicated by reference numeral 20.

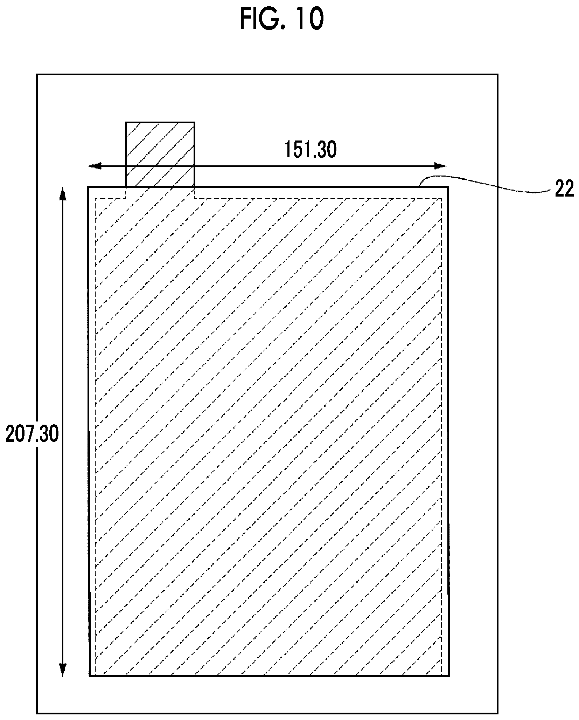

As shown in Fig. 10, the composition for a negative electrode was applied onto the surface of the second collector 21 to form the negative electrode 22 (length 207.30 mm × width 151.30 mm) having a thickness of 320.0 µm, thereby obtaining a second laminate.

A polyethylene separator (thickness: 20 µm) was prepared as a separator.

An end part of the separator was held by a holding member (made of aluminum) to be brought into contact with the positive electrode included in the first laminate, and then the separator was released from the holding member to laminate the separator on the surface of the positive electrode.

The separator was held by the holding member so as to be convex on the positive electrode side, and a curvature radius thereof was 350 mm.

The negative electrode of the second laminate was brought into contact with a surface of the separator different from the surface in contact with the first laminate, and pressurized with a precision roller made of aluminum, thereby obtaining a laminate including the first stage, the battery, and the second stage in this order.

The first stage and the second stage were peeled off, and the battery was taken out.

The battery included the heat welding layer, the adhesive layer, the first collector, the positive electrode, the separator, the negative electrode, the second collector, the adhesive layer, and the heat welding layer in this order.

As a result of visually observing the manufactured battery, collapse of the positive electrode and the negative electrode was not observed. Specifically, the battery from which the first stage and the second stage were peeled off was visually observed from above, and the presence or absence of overflow of the positive electrode from the first collector and overflow of the negative electrode from the second collector was observed. In a case where the overflow was observed, it was determined that the collapse of the positive electrode and the negative electrode occurred.

In addition, in a case where a distance (A1) between a corner portion of the positive electrode provided in the battery and a corner portion of the tab portion of the second collector foil was obtained and an absolute value (|A1 - A0|) of a difference from a distance (A0: 132.4 mm) between corner portions planned to be spaced apart from each other was calculated, it was found that the bonding was carried out without deviation, and the difference was less than 0.2 mm.

### Explanation of References

10, 20: heat welding layer
11: first collector
11A: body part
11B: tab part
12: positive electrode
13: first laminate
21: second collector
21A: body part
21B: tab part
22: negative electrode
23: second laminate
30: separator
40: battery
50: exterior body
100: first stage
101, 201: hole
102, 202: intake pipe
200: second stage

The disclosure of JP2022-120967 filed on July 28, 2022 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

## Claims

1. A manufacturing method of a battery, comprising:
a step of forming a positive electrode on a surface of a first collector of a first stage having a surface on which the first collector is provided to obtain a first laminate;
a step of forming a negative electrode on a surface of a second collector of a second stage having a surface on which the second collector is provided to obtain a second laminate; and
a step of laminating the first laminate, the second laminate, and a separator to obtain a laminate including the first stage, a battery which includes the first collector, the positive electrode, the separator, the negative electrode, and the second collector, and the second stage in this order.

2. The manufacturing method of a battery according to claim 1,
wherein the positive electrode and the negative electrode are formed of a composition containing an active material and a conductive auxiliary agent, and
a content of solid components with respect to a total volume of the composition is 30% by volume to 60% by volume.

3. The manufacturing method of a battery according to claim 1 or 2,
wherein the first stage and the second stage have an adsorption mechanism.

4. The manufacturing method of a battery according to claim 1 or 2,
wherein a heat welding layer and the first collector are provided in this order on the surface of the first stage, and a heat welding layer and the second collector are provided in this order on the surface of the second stage.

5. The manufacturing method of a battery according to claim 1 or 2,
wherein the lamination of the first laminate, the second laminate, and the separator is carried out by
holding an end part of the separator by a holding member,
bringing one surface of the separator into contact with the positive electrode of the first laminate or the negative electrode of the second laminate,
releasing the separator from the holding member, placing the separator on the surface of the positive electrode of the first laminate or the negative electrode of the second laminate, and
placing the positive electrode of the first laminate or the negative electrode of the second laminate on the other surface of the separator.
